# EUROPEAN PATENT APPLICATION

(11) **EP 2 148 473 A1**
(43) Date of publication of application: **27.01.2010**
(21) Application number: 08160883.8
(22) Date of filing: 22.07.2008
(51) Int. Cl.: H04L 12/437

(54) **Switching nodes for high availability networks**

(71) Applicant: ABB Research Ltd, 8050 Zürich (CH)
(72) Inventor: Kirrmann, Hubert, CH-5405, Dättwil (CH)
(74) Representative: ABB Patent Attorneys

(57) **Abstract**

The present invention applies to highly available automation networks arranged in a ring topology connecting critical devices that require seamless communication in case of link or device failure. The network coupling device is connected over a respective first and second port in a communication network with a ring topology operating with full duplex links, and inserts, when sending, in the ring two duplicate frames, one over each of its ports, said frames containing information allowing to identify these two frames as being duplicates of a pair. Each similar device in the ring comprises a Switching Element able to receive a frame from one port and to forward it to the other port without modification, with the exception that the switching Element discards a frame that was originally sent by that same node and/or discards a frame already received from that direction, and/or discards a frame that it cannot recognize as being a member of a pair. A further similar device on the ring is able to receive the two duplicate frames and to pass the earlier of a pair to the application, while discarding the later, based on the identification within the frames.

## Description

### FIELD OF THE INVENTION

The invention relates to the field of industrial communication systems using redundant communication networks for controlling time-critical processes, in particular to vehicle control, drive control or substation automation.

### BACKGROUND OF THE INVENTION

In industrial communication systems for time-critical applications such as vehicle control, drive control or substation automation, availability and reliability are key issues, because a failing communication system may lead to an interruption of the application and to a shutdown of an industrial plant controlled by the latter. Therefore, communication network redundancy is an important feature of industrial communication systems demanding high availability, in particular those using Ethernet-based communication with commercial switches.

A key factor of a redundant system is the recovery delay in case of failure. Time-critical processes require short recovery delays in the order of milliseconds or, preferably, even a seamless recovery invisible to the plant, since too long an interruption of service can trigger a plant shutdown.

A high level of redundancy with seamless operation in case of failure may be provided by duplicating the communication lines, e.g. the electrical or optical transmission cable, as well as at least the physical layer of the corresponding protocol stack of the devices attached to each of the two local area networks through two independent transceivers and bus controllers. For each frame to send, a sender sends two frames nearly simultaneously over both lines and the receiver accepts whichever frame of a pair of redundant frames comes first and discards the later frame. Switchover is seamless, since there is no need to repeat a frame in case of disruption of one path. The tagging of redundant frames offers a complete supervision of both redundant lines with normal traffic, ensuring a high coverage. This method has been described in patent application WO 2006/053459 and standardized as Parallel Redundancy Protocol (PRP) in IEC standard 62439. However, the PRP requires a complete and hence rather uneconomical duplication of the physical network.

A ring topology provides a more cost-effective solution, especially when the switching element is integrated within the node (forming a switching end node), offering a similar availability as PRP but often suffering from long recovery delays. In a ring network, every node has two communication ports connecting to two neighbour nodes hence the ring network can be operated in either or both directions and thus offers resiliency against link failure. Ring networks such as FDDI or Token Ring are state-of-the art and can be of the Ethernet type, in which case protocols such as RSTP (IEEE 802.1D) ensure that frames cannot circulate indefinitely on the ring. WO 2004/056049 discloses a substation-specific ring network normally operated in a first communication direction along a so-called primary ring. In the event of a fault on the primary ring, a part of the latter may be shortcircuited by a part of a secondary ring.

Nodes belonging to the ring are required to have two network interfaces, a property not shared by commercial off-the-shelf devices such as printers, loggers or laptop computers. These devices need to be attached to a switch, which in turn is connected as a point-to-point link to a switching (end) node of the ring. The switch and the switching end node can be integrated into the same device. Since each switching node introduces a forwarding delay, the number of devices in ring networks is generally limited and hierarchically structuring networks and/or coupling peer networks becomes advantageous.

In all these state-of-the-art ring solutions, recovery bases on the redirection of the information flow on the still available links after detection of a failure. Such a restoration introduces a recovery delay that can be incompatible with the requirements of a higher level application.

### DESCRIPTION OF THE INVENTION

It is therefore an objective of the invention to reduce recovery delays in a ring type communication network and to prevent any failure of a network link from affecting higher level applications. These objectives are achieved by a switching node and a method of communicating between devices in different redundant communication networks according to the claims 1 and 5. Further preferred embodiments are evident from the dependent patent claims.

According to the invention, in a ring type communication network with a plurality of switching nodes and operating with full duplex links, a sender node transmits pairs of redundant frames. For each frame to be sent on the ring network, a source and a duplicate frame are transmitted in opposite directions, both frames being relayed by the other nodes of the ring network until they eventually return back to the originating sender node. As a consequence, network load is roughly doubled with respect to a conventional ring network. A destination node thus receives, in the fault-free state, two redundant frames with the same contents. It forwards only the earlier or first frame of the two frames to the upper layer protocols and discards the later or second frame.

The redundant frames can be identified according to the Parallel Redundancy Protocol PRP, as disclosed e.g. in WO 2006/053459, by the sender node appending to each frame a sequence number, an identifier of a (counter-) clockwise relaying direction in the ring network, and a length field that allows recognizing duplicates in conjunction with the source address.

In an advantageous variant of the invention, to prevent frames from circulating indefinitely in the ring, the originating sender node does not relay a frame that it had previously sent itself. The latter is recognized based on the contents of the frame, especially based on the source address of the frame. A further preferred variant provides an additional safeguard against frames which are not, due to failure or untimely removal of the originating sender node, removed from the ring by the latter. In particular, each node may identify and discard frames that were already received. This mechanism is an extension of the PRP algorithm and is applied to each of the two relaying directions separately. An identifier of a (counter-) clockwise relaying direction in the ring network appended to each frame may assist in this distinction and define a separate Virtual Local Area Network for each of the two relaying directions.

In a further preferred embodiment, non-ring devices are connected to the ring network by means of a switching intermediary node. The latter may comprise a third communication port linked to a single non-ring device or a switch which in turn connects to a plurality of non-ring devices. In this configuration, the intermediary node receives, doubles, and transmits source frames from a non-ring node without changing its source address, and by occasionally removing from the ring the source and duplicate frames that originate from non-ring nodes. To that purpose, the intermediary node keeps a Proxy or Interlink Node Table with suitable identifications or addresses of the non-ring devices that it acts on behalf of. Preferably, this table is kept up-to-date by removing entries corresponding to non-active non-ring devices after a time-out.

According to another aspect of the invention, a pair of coupling nodes is used to couple a ring network to a duplicated PRP network, in which case one coupling node injects frames on the ring in one direction only, while the other coupling node injects frames in the opposite direction. In a final embodiment, two pairs of such coupling end nodes can be used to couple two peer rings, one pair acting in one direction of the ring while the other pair injects frames in the opposite direction.

The present invention also relates to a computer program product including computer program code means executable on a processor of a switching node in a communication network of a process control system and storable on a computer readable medium such as a memory integrated in the node or a data carrier that can be inserted into the node.

In summary, the present invention combines the seamless property of PRP and the low hardware costs of ring networks and provides for seamless recovery in a ring network. In addition, coupling highly available rings with a redundant network, and coupling two or more peer rings, becomes possible.

### BRIEF DESCRIPTION OF THE DRAWINGS

The subject matter of the invention will be explained in more detail in the following text with reference to preferred exemplary embodiments which are illustrated in the attached drawings, of which
- Fig.1: shows a state-of-the-art automation network in ring topology,
- Fig.2: depicts some of the components and protocol layers of a switching end node,
- Fig.3: shows a ring network coupled to a redundant network, and
- Fig.4: shows a ring network coupled to a peer ring network.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

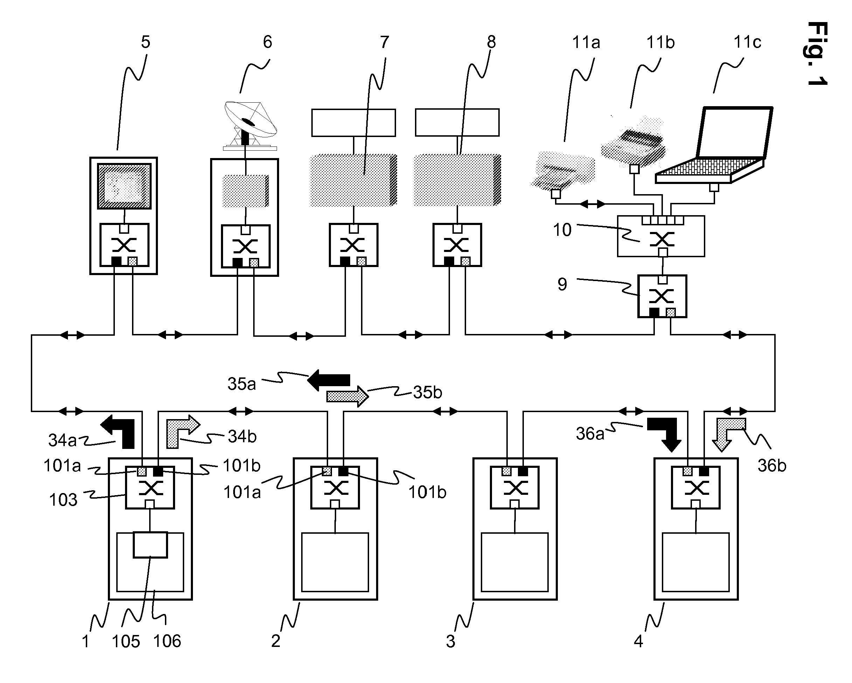

Fig.1 depicts firstly a state-of-the-art automation network with a ring topology, in which all switching nodes within the ring (1 9), such as protection, control and measuring devices (1-4), supervision workstation (5), clock master (6), redundant telecontrol links (7, 8) as well as intermediary nodes (9) for non-ring devices (11a-11c) include a switch element (103) that is able to forwards frames (35a, 35b) from one port (101a, 101b) to the other, ensuring circulation of frames round the ring; The switch element of a sender node (1) can inject a frame passed to it from the higher protocol layers (106) through the link layer entity (105) in either or both directions (34a, 34b). The switch element of a destination node (4) is capable of receiving frames (36a, 36b) from either direction of the ring and to pass them to its own higher layer protocols.

While this general principle applies to most rings, which offer a variety of means for interrupting the ring (tokens, test frames, ..) in order to avoid permanently circulating frames, this invention discloses that a node always sends a frame received from its higher layer protocols over both its ports, that the two duplicates of the frame circulate over the bus in opposite direction until they reach their original sender, and that receivers pass only the earlier frame of a pair to their higher layer protocols and discard the duplicate.

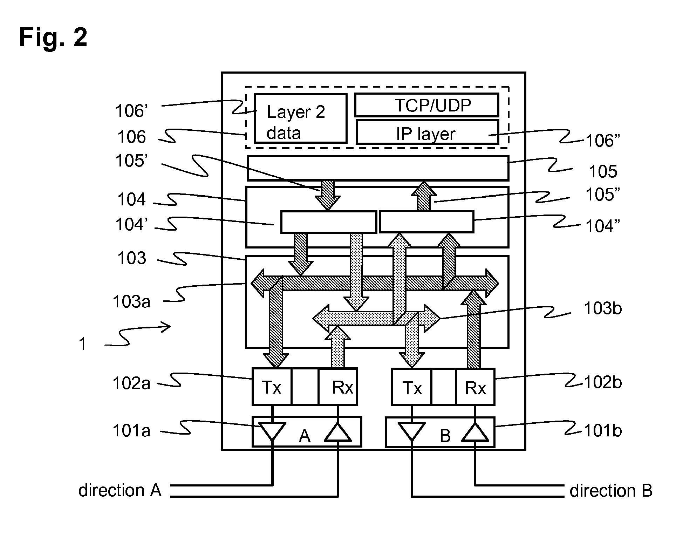

Fig.2 shows the internal structure of a switching node (1-9) assuming that part of the logic may be executed in hardware, other in programmable logic and other by a processor under control of a stored program. A node consists of two communication ports (101a, 101b), one for each direction, with transceivers and decoding / encoding logic (102a, 102b) allowing to generate and check the frames contents and especially to detect that this frame was originally sent or already received, by inspecting the source address and other information in the frame. The decoding / encoding logic is connected to a switch element (103).

The switch element (103) can transfer frames from port to port directly over two busses (103a, 103b) corresponding to the two direction of transfer on the ring, provided it is not the originator of the frame or did not already receive the same frame and is able to identify the frame as being properly formed. The switching element (103) is connected to the Link Redundancy Entity LRE (104).

Source frames to be transmitted are received from non-ring devices (11a-11c) by switching intermediary node (9), or prepared by the upper protocol layers (106), such as the real-time publisher/subscriber stack (106') or the Internet Protocol (106") on which other protocols such as TCP or UDP are built, of a switching end node (1-6). The source frame (105') is passed over the link layer interface (105) to the LRE which has means (104') to duplicate this frame and to append the redundancy check information to it. For each such frame to send, the LRE generates two frames which switch element (103) sends on the ring, one in each direction A or B, as soon as the medium is available.

In reception, the switch element passes both received frames to the LRE, which has means (104") to reject duplicates received from the ring and to pass only the first frame (105") of a pair to the upper protocols (106). The LRE discard can be done in interaction with a network controller or entirely in programmable logic.

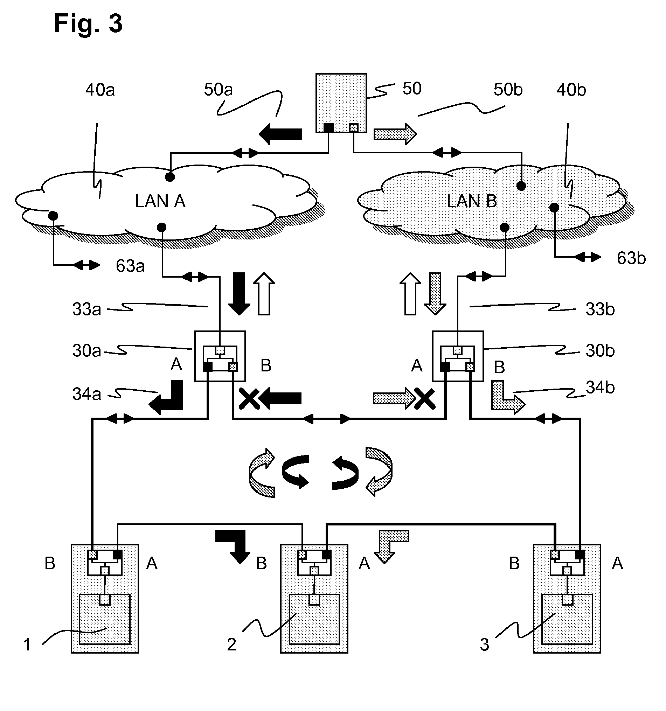

In Fig.3, a sending node (50) operating according to the PRP protocol sends frame duplicates (50a, 50b) to two redundant or duplicated communication networks or lines designated as LAN A (40a) and LAN B (40b). The frames are forwarded to interlinks (33a, 33b) and received by coupling nodes (30a, 30b). The coupling node on LAN A (30a) only inserts the received frame into the ring, via a first communication port (A) and in a first ring communication direction (34a), while coupling node on LAN B (30b) inserts the frame in the opposite direction into the ring (34b). Both frames are forwarded over the ring by the switching nodes (1, 3) and arrive with a certain delay to the destination node (2), which processes the first frame of a pair and discards the duplicate. When the frame (34a) sent by coupling node (30a) reaches that coupling node again, it is discarded since the coupling node (30a) registers the source of all frames it sends on behalf of LAN A and thus identifies the frame as sent by itself. The coupling node on LAN A (30a) relays frames originating from a node (1-3) of the ring network, either to the LAN A if received over its second port (B) as a frame circulating in the first ring communication direction, or to the second port (B) if received over the first port (A) as a frame circulating in the opposite direction.

More than one ring can be connected to the duplicated network, by means of additional interlinks (63a, 63b) and corresponding coupling devices.

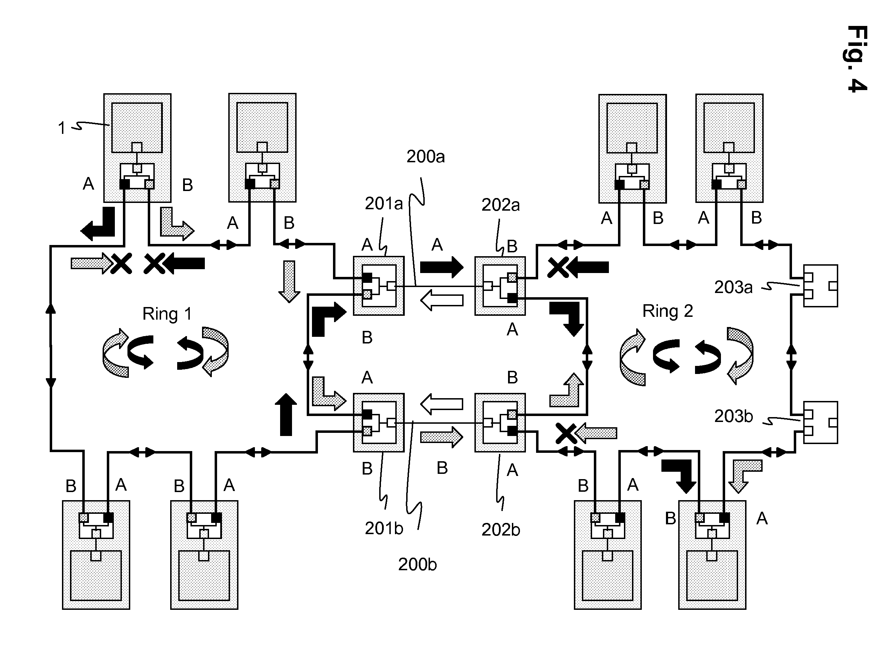

Fig.4 shows essential components of a coupling between peer ring networks. In this embodiment, two pairs of coupling nodes (201a, 201b; 202a, 202b) are used to connect two rings. Each coupling node is operating essentially as described in connection with Fig.3, inserting frames only in one ring communication direction and forwarding to the link redundancy entity only frames that were received at the other port and circulating with the same ring communication direction.

Further peer rings can be connected by further pairs of coupling nodes (203a, 203b).

### LIST OF DESIGNATIONS

- 1-9: switching nodes
- 10: switch to non-ring nodes
- 11a, 11b, 11c: non-ring nodes
- 30a: coupling node for direction A
- 30b: coupling node for direction B
- 33a: interlink connecting coupling node A to LAN A
- 33b: interlink connecting coupling node B to LAN B
- 34a, 35a, 36a: frame circulating in direction A
- 34b, 35b, 36b: frame circulating in direction B
- 40a: LAN A
- 40b: LAN B
- 50: PRP device
- 50a: frame sent over one LAN A by a PRP device
- 50b: frame sent over one LAN B by a PRP device
- 63a: interlink to another ring in direction A
- 63b: interlink to another ring in direction B
- 101a, 101b: communication ports
- 102a, 102b: decoding / encoding logic
- 103: switch element
- 103a, 103b: internal bus for transferring frames from one port to the other
- 104: Link Redundancy Entity (LRE)
- 104': Frame duplicator (inserts the redundancy information)
- 104": Filter for discarding a duplicate frame
- 105: Link Layer interface
- 105': Frame to send passed by the higher layers over the link layer interface
- 105": Frame received from the LRE to be passed to the higher layers
- 106: Higher protocol layers
- 106": Publisher /Subscriber protocol on level 2
- 106': IP protocol
- 200a: Interlink A between ring 1 and ring 2
- 200b: Interlink B between ring 1 and ring 2
- 201a: coupling node in ring 1 in direction A
- 201b: coupling node in ring 1 in direction B
- 202a: coupling node in ring 2 in direction A
- 202b: coupling node in ring 2 in direction B
- 203a: coupling node in ring 2 in direction B to a third ring
- 203b: coupling node in ring 2 in direction B to a third ring

## Claims

1. A switching node (1-9) with a first and second communication port (101a, 101b) to be connected to a first and second neighbouring node (1-9), respectively, of a communication network with a ring topology, the switching node being adapted to
- generate a duplicate frame of a source frame (105') to be transmitted to a destination node (4) and to transmit, essentially simultaneously via the first and the second port, respectively, the source frame and the duplicate frame to the first and second neighbouring node,
- relay unidentified frames from one port to the other, and
- retain an earlier frame (105") of a pair comprising a source and a duplicate frame received from a sender node (1) via the first and the second port, respectively, and to reject a later frame of the pair.

2. The switching node according to claim 1, **characterized in that** it is adapted to - eliminate any frame received and identified as a source or duplicate frame transmitted by the switching node itself.

3. The switching node according to claim 1, **characterized in that** it is adapted to - eliminate a frame identified as having been received previously via the same port of the node.

4. The switching node according to claim 1, **characterized in that** it is adapted to
- receive a source frame from a non-ring device (11a-11c), and
- store an identification of the non-ring device.

5. A method of communicating between a first device (50) connected to two redundant communication networks (40a, 40b) and a second device (2) connected to a ring network as a switching node according to one of the preceding claims, wherein two coupling nodes (30a, 30b) are provided for coupling the two communication networks to the ring network, each coupling node comprising a first and second port to connect to a first and second neighbouring node of the ring network, respectively, and a third port to connect to either one of the communication networks, the method comprising -relaying, by the two coupling nodes, frames from the third port to the first port, and from the second port to the third port.
